# DEMANDE DE BREVET EUROPEEN

(11) **EP 2 103 572 A1**
(43) Date de publication de la demande: **23.09.2009**
(21) Numéro de dépôt: 08405083.0
(22) Date de dépôt: 19.03.2008
(51) Int. Cl.: C03C 1/10, C09D 7/12, C03C 8/18

(54) **Email**

(71) Demandeur: ROLEX SA, 1211 Genève 26 (CH)
(72) Inventeur: Reigner, Michèle, 1110 Morges (CH); Pujol, Ollivier, 1006 Lausanne (CH)
(74) Mandataire: Moinas, Michel

(57) **Abrégé**

L'invention se rapporte à un émail translucide ou transparent coloré contenant des nanoparticules métalliques qui perdu leur tendance naturelle à s'agréger les unes aux autres et dont la coloration est assurée essentiellement par réflexion de la lumière.

Les nanoparticules ont perdu leur aptitude à s'agréger les unes aux autres par enrobage ou ont été fonctionnalisées par voie électrostatique, ou à l'aide d'entités à fort encombrement stérique ou encore à l'aide d'entités hydrophiles placées à leur surface

Les nanoparticules peuvent être des nanoparticules d'or qui confère à l'émail un rouge intense et profond.

## Description

La présente invention se rapporte à un émail transparent ou translucide coloré. Cet émail peut se présenter sous la forme d'une couche s'appuyant sur un substrat réfléchissant la lumière, l'effet "couleur" étant alors essentiellement assuré par réflexion de surface, réflexions internes multiples et dispersion.

On sait que l'émail est un composé vitreux obtenu à partir d'une fritte de base dans la fabrication de laquelle entrent de différents fondants permettant d'abaisser sa température de fusion. Il est habituellement déposé sur un substrat, par exemple un métal, pour y créer des décors, et il est également possible de le déposer "dans le vide" dans des cellules métalliques et de bénéficier ainsi de la transparence de l'émail pour obtenir certains effets. On parle alors d'émaillage "plique-à-jour". On sait par ailleurs que la couleur des émaux est obtenue au moyen de particules métalliques. Il existe des émaux transparents, semi-transparents et opaques en fonction de la composition de la fritte de base.

On sait enfin que des particules d'or colloïdales dans un verre donnent en transmission une coloration rouge intense et profonde. Un exemple célèbre est le verre de Murano dont les secrets de fabrication ont été très bien gardés jusqu'à nos jours.

La présente invention vise à obtenir des colorations de type Murano, c'est-à-dire intenses et profondes, non sur un verre, mais sur un émail. L'émail se distingue du verre en ce que, contrairement à celui-ci qui est obtenu par fusion de ses constituants à haute température, il est appliqué sous forme de solution aqueuse appelée "barbotine", laquelle est séchée, avant d'être "cuite" à une température très nettement inférieure à celle de la température de fusion du verre.

Précisons en outre que le verre est essentiellement constitué de silice ou oxyde de silicium, tandis que l'émail comprend généralement, outre de la silice, du feldspath, du kaolin et des oxydes métalliques.

L'invention concerne donc strictement un émail, translucide ou transparent, contenant des nanoparticules métalliques qui le colorent de façon à lui conférer une couleur profonde et intense. Celle-ci est essentiellement assurée par réflexion de la lumière, en particulier lorsque l'émail est déposée en couches sur un substrat.

Selon l'invention, les nanoparticules ont perdu leur tendance naturelle à floculer, coalescer ou s'agréger les unes aux autres et gardent leur stabilité colloïdale, tant dans la barbotine que dans l'émail fini, en restant isolées et individuellement séparées.

En effet, une agrégation ou une précipitation des nanoparticules conduit à des couleurs ternes ou brunâtres, voire une perte totale de la teinte rouge, évidemment à l'opposé des couleurs rouges profondes et intenses recherchées.

Un premier moyen pour ôter aux nanoparticules métalliques leur aptitude à s'agréger lors de la préparation de l'émail ou lors du traitement thermique de cuisson de celui-ci, est de les enrober d'une substance inerte vis-à-vis des autres constituants présents dans la barbotine, par exemple de la silice cristalline tel que cela est notamment décrit dans l'exposé d'invention WO 2008/014623, qui concerne des céramiques et non des émaux.

Un deuxième moyen d'éliminer l'aptitude des nanoparticules métalliques à s'agréger ou se rassembler les unes avec les autres est de fonctionnaliser leur surface.

On peut pour ce faire mettre en oeuvre différentes techniques, par exemple par répulsion électrostatique, à l'aide de porteurs de charges placés à la surface des nanoparticules de telle façon à ce qu'elles se repoussent les unes des autres et restent en suspension homogène. La théorie des colloïdes propose diverses solutions dont l'ionisation des groupes fonctionnels déjà présents en surface ou l'adsorption spécifique d'ions. Ainsi, on peut par exemple ajouter de la gomme arabique, lors de la synthèse des nanoparticules ou à la solution aqueuse, ce qui va stabiliser la suspension.

Une autre technique, d'ordre physique, consiste à développer à la surface des nanoparticules, par exemple par greffage ou par liaisons électrostatiques là aussi, des entités, par exemple des molécules ou des ions dont l'encombrement stérique est tel qu'elles ne pourront plus s'incruster les unes dans les autres, évitant ainsi un phénomène d'agrégation ou de précipitation. Un bon exemple de telles entités est le polystyrène qui va s'adsorber en surface des nanoparticules et faire en sorte qu'elles ne puissent pas s'approcher les unes des autres.

Une autre technique encore est rendre la surface des nanoparticules hydrophile, par exemple aussi par adsorption d'entités, notamment de molécules, de telle sorte que les nanoparticules ainsi rendues hydrophiles vont préférer se lier à l'eau de la solution et s'écarter ainsi les unes des autres sans pouvoir se réunir lors du séchage de la barbotine ou de la cuisson de l'émail. Comme substances hydrophiles, on utilisera avantageusement des substances de type polystyrène modifié par des groupes carboxyles, ou encore des tensioactifs comme le dodécylsulfate de sodium.

Selon l'invention, les nanoparticules métalliques peuvent être constituées d'un métal noble tel que de l'or, de l'argent, ou du platine, ou d'un autre métal, par exemple le fer, le chrome, le cuivre, le cobalt, le manganèse ou encore leurs alliages. Les nanoparticules métalliques peuvent également être constituées d'un oxyde métallique, tel que par exemple l'oxyde d'étain.

Un avantage déterminant de l'émail selon l'invention, compte tenu des normes toujours plus contraignantes en matière d'environnement et de santé publique, est que, pour assurer la coloration, il n'est plus nécessaire d'ajouter les pigments traditionnels des émaux, On peut ainsi obtenir toute une gamme de colorations et de nuances sur toute la longueur du spectre visible, sans utiliser de sels toxiques tels que les sels de plomb, d'étain, de sélénium, de cérium ou de cadmium.

L'or donne habituellement une coloration rouge, tandis que le chrome par exemple va apporter une coloration verte, toute chose étant égale par ailleurs. Question couleur, les auteurs ne sont d'ailleurs pas d'accord entre eux sur l'influence de la taille des nanoparticules, de leur concentration et de leur forme.

L'invention concerne également des émaux en couches qui peuvent être déposés sur un fond, une surface métallique ou autre surface réfléchissant la lumière, par exemple sur de l'émail blanc. L'effet "couleur" intense et profond est alors amplifié par la diffusion de la lumière réfléchie sur le fond. Il est à noter ici que, pour obtenir des effets de moiré, ou des effets "ailes de papillons" ou "hologrammes" (c'est-à-dire des effets d'irisation, de variation de couleurs ou d'apparition d'images fantômes lorsque l'incidence de la lumière varie) on peut créer un décor fini constitué de plusieurs couches d'émail, notamment si les couches d'émail sont de très faible épaisseur, typiquement inférieure à 1 µm.

On aura compris que la mention s'applique à de nombreux domaines relevant de la décoration, notamment sur terre cuite ou objets métalliques, en particulier dans le domaine de la joaillerie et de la bijouterie.

L'invention trouvera également une application avantageuse dans le domaine de l'horlogerie pour la décoration à l'aide d'émail de boîtes ou de cadrans de montres.

## Revendications

1. Email translucide ou transparent coloré contenant des nanoparticules métalliques, **caractérisé en ce que** ces nanoparticules sont des nanoparticules ayant perdu leur tendance naturelle à s'agréger les unes aux autres.

2. Email selon la revendication 1, **caractérisé en ce qu'**il se présente sous forme d'une couche s'appuyant sur un substrat réfléchissant, la coloration étant assurée essentiellement par réflexion de la lumière.

3. Email selon la revendication 1, **caractérisé en ce que** les nanoparticules ont perdu leur aptitude à s'agréger les unes aux autres par enrobage.

4. Email selon la revendication 1, **caractérisé en ce que** les nanoparticules ont perdu leur aptitude à s'agréger les unes aux autres par répulsion électrostatique, par fonctionnalisation à l'aide de porteurs de charges placés sur leur surface, par exemple de la gomme arabique.

5. Email selon la revendication 1, **caractérisé en ce que** les nanoparticules ont perdu leur aptitude à s'agréger les unes aux autres par fonctionnalisation à l'aide d'entités à fort encombrement stérique tel que du polystyrène.

6. Email selon la revendication 1, **caractérisé en ce que** les nanoparticules ont perdu leur aptitude à s'agréger les unes aux autres par fonctionnalisation à l'aide d'entités hydrophiles placées à leur surface telles que du polystyrène modifié par des groupes carboxyles, ou des tensioactifs comme le dodécylsulfate de sodium.

7. Email selon l'une des revendications précédentes, **caractérisé en ce que** les nanoparticules métalliques sont des nanoparticules de métal noble tel que l'or, l'argent ou le platine, ou d'un autre métal choisi dans le groupe comprenant le fer, le chrome, le cuivre, le cobalt ou le manganèse, ou leurs alliages, ou d'un oxyde métallique tel que l'oxyde d'étain.

8. Procédé de fabrication d'un émail selon l'une des revendications précédentes, **caractérisé en ce qu'**on prépare une barbotine, qu'on y ajoute des nanoparticules ayant perdu leur aptitude à s'agréger les unes aux autres dans la barbotine ou pendant la cuisson subséquente, puis qu'on sèche la barbotine et on cuit l'émail brut ainsi obtenu.

9. Utilisation de l'émail selon l'une des revendications 1 à 7 en bijouterie, joaillerie ou horlogerie.
